# EUROPEAN PATENT SPECIFICATION

(11) **EP 0 424 077 B1**
(45) Date of publication and mention of the grant of the patent: **05.01.1994**
(21) Application number: 90311299.3
(22) Date of filing: 16.10.1990
(51) Int. Cl.: B65G 1/04, B66F 9/07

(54) **Pallet handling platten unit**
Palettenhandhabungs- und Verschiebeeinrichtung
Unité pour manipuler et déplacer des palettes

(30) Priority: 16.10.1989 GB 8923257
(43) Date of publication of application: 24.04.1991
(73) Proprietor: CLECO LIMITED, Market Harborough, Leics LE16 7PZ (GB)
(72) Inventor: Pemberton,Trevor A., Leicestershire LE16 7PZ (GB); Wright,John C.A., Bedfordshire, LU5 4DD (GB); Jinks,David M., Leicestershire, LE7 8WG (GB)
(74) Representative: SERJEANTS

(56) References cited:
- DD-A- 96 199
- DE-A- 2 015 001
- DE-A- 2 931 241
- DE-B- 1 295 478

## Description

### Field of the Invention

The invention relates to platten units for use in pallet handling and in the storage of palletized loads in a warehouse rack system as defined in the preamble of claim 1.

### Background Art

Palletized loads are conventionally stored on rack systems in warehouses, with each pallet being placed spanning a pair of horizontal support beams which run adjacent to and parallel to an aisle. The pallet handling equipment moves along the aisle and can be raised and lowered to deliver palletized loads to empty positions in the rack and to retrieve palletized loads from filled positions.

The handling equipment may be a platten unit which has one or two horizontally and telescopically extending lifting arms or plattens designed to fit beneath a pallet and lift the pallet and its load. The plattens may be extensible to either side of the platten unit body so that collection of pallets from and delivery of pallets to both sides of the aisle is possible. Such a platten unit is said to be a double reach telescopic unit and such a unit is known from DD-A-96 199.

Continental European pallets conventionally comprise top boarding which provides a top surface or goods supporting platform, and three rows of legs or runners on which the top boarding is supported. The plattens of a platten unit for pallet handling contact the bottom surface of the top boarding to lift the loaded pallet.

One problem encountered by pallet handling equipment is that not all pallets conform to the above standard. Most British pallets, as well as those of many other countries such as the USA, generally comprise additional bottom boarding which gives the pallets additional stability and strength. The platten or plattens of a platten unit for pallet handling contact the underside of the bottom boarding. which extends across some or all of the underside of the pallet. Therefore a pallet with top and bottom boarding cannot be set down on a level surface or on a pair of horizontal beams of conventional warehouse racking without providing some means for removing the plattens while the level surface or horizontal beams takes the weight of the loaded pallet. This problem has in the past been met by providing packing pieces for the warehouse racking. Each bay of the racking system is provided with two horizontal beams, and each beam is provided with two packing pieces being load-bearing members which straddle the beam on which they are mounted and present a load-bearing surface for supporting a pallet a spaced distance above the beam. A pallet with top and bottom boarding can then be placed on the array of four packing pieces in the racking bay, and the plattens can be withdrawn through the spaced distance separating the bottom of the pallet and the beams. This solution does however carry its own drawbacks since four packing pieces are required per bay: packing pieces are costly to secure in place; and additional storage height is required to accommodate the packing pieces

The invention provides a pallet handling platten unit for use with pallets with top and bottom boarding, which avoids the above disadvantages.

### Summary of the Invention

The invention provides a pallet handling platten unit for placing top and bottom boarded pallets on racks and retrieving them therefrom, comprising one or more primary plattens for engaging beneath the bottom boarding of a pallet and moving the pallet laterally of the unit to a position over a pair of beams of a warehouse storage rack; at least one auxiliary platten normally stowable beneath the level of the load-bearing surface or surfaces of the primary platten or plattens; means for elevating the auxiliary platten or plattens to first and second elevated levels relative to the primary platten or plattens: means for moving the auxiliary platten or plattens laterally of the unit while at such a first elevated level and not under load, to insert it or them into the fork pockets of a pallet on the laterally extended primary platten or plattens beneath the top boarding of the pallet, means for raising the auxiliary platten or plattens when so extended to the second elevated level to take the load of the pallet from the primary platten or plattens; means for withdrawing the primary platten or plattens while the load is taken by the auxiliary platten or plattens; means for lowering the auxiliary platten or plattens to deposit the pallet onto the beams of the rack; and means for withdrawing the auxiliary platten or plattens from the fork pockets.

It will be appreciated that the above unit can be used equally for depositing loaded pallets on a storage rack or for retrieving loaded pallets from a storage rack.

When the loaded pallet is located centrally of the platten unit for movement along an aisle of a warehouse, it rests on the primary platten or plattens and the auxiliary plattens are stowed beneath the level of the load-bearing surface or surfaces of the primary platten or plattens. Only when the pallet has been moved laterally of the unit for example from an aisle position to a position within a storage bay of a warehouse rack storage system, can the auxiliary plattens be raised to their first level and extended laterally into the fork pockets of the pallet. Because the auxiliary plattens are simply to take the weight of the loaded pallet in the bay while the primary platten or plattens is or are being withdrawn, and do not necessarily function to move laterally while under load, they can be designed to move on slides rather than on rollers, and can be moved laterally by means of a hydraulic ram, or by a hydraulic or electric motor, any of which may be associated with a cable or chain and pulley system to give a platten movement in excess of the ram or motor movement. It is sufficient for the auxiliary plattens to extend into the fork pockets for only about two-thirds of the width of the pallet.

If the primary plattens are double reach plattens, then the auxiliary plattens must be double reach plattens. The vertical movement of the auxiliary plattens relative to the primary platten or plattens is preferably under the control of a hydraulic ram, which may act directly to create a vertical lift of the auxiliary plattens to their first and second elevated levels relative to the first platten or plattens, or which may act on a lever or cam arrangement to provide the necessary vertical lift. The control of the vertical and lateral movements of the auxiliary plattens is preferably interfaced with the control of the primary platten or plattens in a single integrated control unit.

All top and bottom boarded pallets comprise a pair of outside edge runners or rows of outside legs separating the top and bottom boarding. The smallest sized pallets have no intermediate runners or legs. Most pallets have one central intermediate runner or row of legs. Very large or heavy duty pallets may have more than one intermediate runner or row of legs. Clearly the location of the auxiliary plattens is chosen to avoid fouling any intermediate runners or rows of legs. For example, for a pallet system with no central runner a single broad auxiliary platten may be used. For a pallet system with three runners, if the platten unit comprises a pair of primary plattens for engaging beneath the bottom boarding of the pallet near the outside legs or runners, then the auxiliary plattens preferably comprise a pair of plattens for engaging beneath the top boarding of the pallet between the primary plattens near the central legs or runner. If for such a pallet system the platten unit comprises a single primary platten for engaging centrally beneath the bottom boarding of the pallet then the auxiliary plattens preferably comprise a pair of plattens for engaging beneath the top boarding of the pallet one one each side of the primary platten near the outside legs or runners. In the latter case a synchronous control of the auxiliary plattens may be achieved by an electrical or hydraulic link rather than by mechanical interconnection.

### Drawings

Figure 1 is a schematic side view of a pallet illustrating the preferred positions of single and double primary plattens in use:
Figure 2 is a schematic section through a pair of plattens of a conventional double platten unit;
Figure 3 is a section similar to that of Figure 2 but through a platten unit of the invention illustrating the location of a pair of auxiliary plattens:
Figure 4 is a section similar to that of Figure 3, but showing a pallet on the pair of primary plattens
Figure 5 is a section similar to that of Figure 4, but showing the auxiliary plattens raised to their first elevated levels and aligned with the fork pockets of the pallet, for lateral extension into those fork pockets:
Figure 6 is a section similar to that of Figure 5, but showing the auxiliary plattens raised to their second elevated levels to take the load of the pallet from the primary plattens and to permit lateral withdrawal of the primary plattens;
Figure 7 is a schematic side elevation of an auxiliary platten unit only of the platten unit of Figure 3.

### Description of a Preferred Embodiment of the Invention

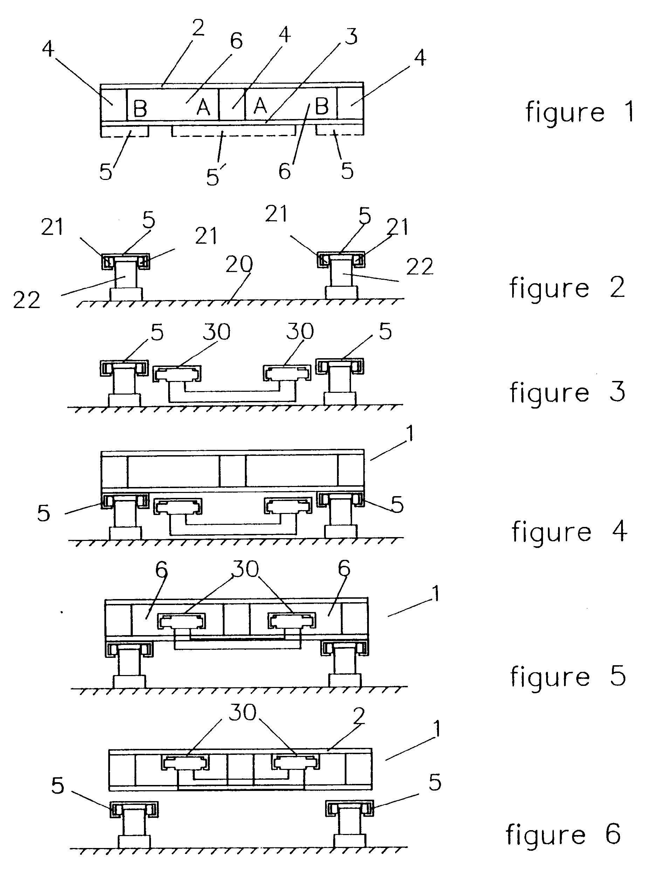

Figure 1 illustrates a side view of a conventional top and bottom boarded pallet 1, simply for the purpose of identifying the different lifting areas of that pallet. The pallet comprises top boarding 2 and bottom boarding 3 separated by three runners 4 which are structural members extending the full depth of the pallet. If the runners 4 were replaced by nine discrete wooden blocks, then the pallet would be a four-way entry pallet rather than a two-way pallet.

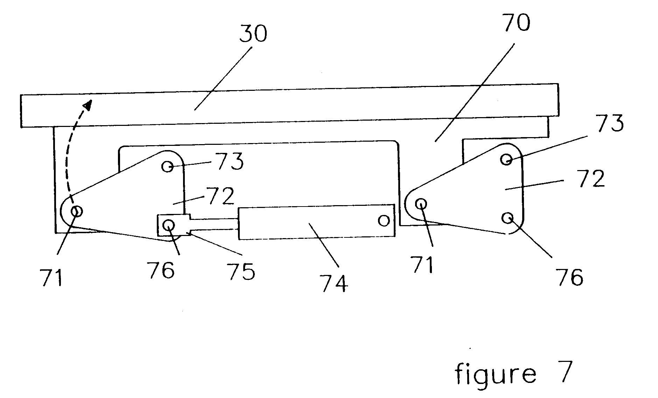

Also shown in Figure 1 in broken lines are the positions of two plattens 5 of a platten unit such as that shown in Figure 2 which in use support the pallet on its bottom boarded surface in the vicinity of the outermost two runners 4. Alternatively, the platten unit may have a single central platten 5' which is shown in chain-dotted line, for supporting the pallet generally under the central runner 4.

Also identified in Figure 1 are the particular locations within the fork pockets 6 of the pallet for entry of the auxiliary plattens of a platten unit of the invention. In the case of a platten unit with two primary plattens 5, the auxiliary plattens preferably enter the fork pockets 6 near the central runner 4 in the general position marked AA. In the case of a platten unit with a single primary platten 5', the auxiliary plattens preferably enter the fork pockets near the outside runners 4, in the zones generally marked BB.

Figure 2 shows very schematically the two plattens 5 of a conventional platten unit. The plattens are mounted on a load platform 20 which can be traversed along an aisle and vertically between different bays of a warehousing rack system in conventional manner. Each platten comprises a laterally movable load-bearing rail telescopically extendable to either side of the load platform 20 by being mounted on rollers 21 on an intermediate rail 22 which is itself movable laterally of the platform. The lateral movement is conventionally controlled by gearing (not shown) which is effective to extend the two plattens 5 simultaneously to one side only of the unit (single reach) or to either side of the unit (double reach).

Figure 3 shows schematically how in a platten unit of the invention the above conventional plattens 5, which will be referred to as the primary plattens, are supplemented by a pair of auxiliary plattens 30. The auxiliary plattens 30 are moveable vertically with respect to the primary plattens 5, as well as being mounted for extension laterally in single reach or double reach fashion in the same way as the primary plattens 5. The vertical and horizontal movements may be achieved in any convenient manner, but preferably are actuated by two independent hydraulic rams (not shown). The movement of the auxiliary plattens 30 is illustrated in Figures 4 to 6. In Figure 4 a pallet 1 is shown resting on the primary plattens 5 of the unit, with the auxiliary plattens 30 being retracted to below the level of the load-bearing surfaces of the primary plattens 5. In this position the pallet 1 can be carried by the platten unit along the aisles of a warehouse, and can be raised or lowered to any intended delivery height. When at the intended location, the plattens 5 can be extended laterally to the side of the unit, with the pallet 1 clearing the auxiliary plattens 30.

When the loaded pallet 1 has been moved completely to one side of the platten unit on laterally extended primary plattens 5, the auxiliary plattens 30 can be raised to a first working height, relative to the primary plattens 5, as shown in Figure 5. At this height the auxiliary plattens 30 can be extended laterally into the fork pockets 6 of the pallet 1. The auxiliary plattens 30 are then raised to their second working height as shown in Figure 6, being the height at which they engage the under surface of the top boarding 2 of the pallet 1 and take the load of the pallet, lifting it marginally from the primary pattens 5 as shown in Figure 6. The primary pattens 5 can then be withdrawn, and the loaded pallet 1 lowered on the auxiliary plattens 30 until it rests on the beams of a rack storage bay. This lowering can be achieved by lowering the auxiliary plattens 30 relative to the load platform to just below their first working height or by lowering the entire load platform 20 with the auxiliary plattens extended. The auxiliary plattens 30 can then be retracted and lowered once again to the position shown in Figure 3.

Figure 7 illustrates schematically one possible mechanism for controlling the raising and lowering of the auxiliary plattens 30. The auxiliary plattens 30 are slidably mounted on a frame 70 which is supported on four pivot pins 71 of four lever mounting plates 72 mounted one at each corner of the frame 70. Each lever mounting plate 72 is pivotally mounted relative to the body of the platten unit at a top corner 73, so that clockwise rotation of the lever mounting plates 72 as indicated by the dotted line in Figure 7 raises the frame 70 in an arc. The movement of the lever mounting plates 72 is controlled by a hydraulic ram 74 mounted between, at its right hand side as illustrated, a bulwark (not shown) of the body of the platten unit and, at its left hand side as illustrated, a rod 74 connecting a pair of the lever mounting plates 72. The force of the hydraulic ram 74 is transferred to the other pair of the lever mounting plates 72 by means of tie rods (not shown) pivotally connected between pivot pins 76 at corresponding corners of the various lever mounting plates 72.

As the ram 74 is extended, so the four lever mounting plates 72 rotate clockwise in unison, moving the auxiliary plattens 30 through their first elevated height to their second elevated height.

## Claims

1. A pallet handling platten unit for placing top and bottom boarded pallets on racks and retrieving them therefrom, comprising one or more primary plattens (5) for engaging beneath the bottom boarding of a pallet and moving the pallet laterally of the unit to a position over a pair of beams of a warehouse storage rack; CHARACTERISED BY having at least one auxiliary platten (30) normally stowable beneath the level of the load-bearing surface or surfaces of the primary platten or plattens; means (74,72) for elevating the auxiliary platten or plattens to first and second elevated levels relative to the primary platten or plattens; means for moving the auxiliary platten or plattens laterally of the unit while at such a first elevated level and not under load, to insert it or them into the fork pockets of a pallet on the laterally extended primary platten or plattens beneath the top boarding of the pallet; means (74,72) for raising the auxiliary platten or plattens when so extended to the second elevated level to take the load of the pallet from the primary platten or plattens; means for withdrawing the primary platten or plattens while the load is taken by the auxiliary platten or plattens; means (74,72) for lowering the auxiliary platten or plattens to deposit the pallet onto the beams of the rack; and means for withdrawing the auxiliary platten or plattens from the fork pockets.

2. A pallet handling platten unit according to claim 1, wherein the means (74, 72) for elevating the auxiliary platten or plattens to the first and second elevated levels comprise a hydraulic ram (74).

3. A pallet handling platten unit according to claim 2, wherein the hydraulic ram (74) acts on a lever or cam arrangement (72) to provide the necessary vertical movement.

4. A pallet handling platten unit according to any preceding claim, wherein the means for moving the auxiliary platten or plattens laterally of the unit at the first elevated level comprises a hydraulic ram or a hydraulic or electric motor.

5. A pallet handling platten unit according to claim 4, wherein the hydraulic ram or hydraulic or electric motor is associated with a cable or chain and pulley system to give a platten movement in excess of the ram or motor movement.

6. A pallet handling platten unit according to any preceding claim, wherein both the primary plattens and the auxiliary plattens are double reach plattens.

## Patentansprüche

1. Palettenverlade-Tragplatteneinheit, mit der oben und unten verbretterte Paletten in und aus Regalen verladen werden, bestehend aus einer oder mehreren Primärplatten (5), die unter dem Unterbrett einer Palette angreifen und die Palette seitlich zur Tragplatteneinheit in eine oberhalb von zwei Trägern eines Warenlagerregals befindliche Lage verschieben, GEKENNZEICHNET durch folgende Bestandteile: mindestens eine Hilfsplatte (30), die normalerweise unterhalb des Niveaus der Primärplattentragfläche(n) verstaut wird, Mittel (74, 72) zum Anheben der Hilfsplatte(n) auf gegenüber der/den Primärplatte(n) erhöhte erste und zweite Niveaus; Mittel, mit denen auf dem ersten Niveau die unbelastete(n) Hilfsplatte(n) gegenüber der Einheit seitwärts so bewegt wird/werden, daß sie in die Gabeltaschen einer auf der/den seitlich ausgefahrenen Primärplatte(n) ruhenden Palette unterhalb des Paletten-Oberbrettes eingeführt werden kann/können; Mittel (74, 72), mit denen die Hilfsplatte(n) im ausgefahrenen Zustand auf das zweite erhöhte Niveau angehoben wird/werden, um die Palettenlast von der/den Primärplatte(n) zu übernehmen; Mittel, mit denen die Primärplatte(n) bei Übernahme der Last durch die Hilfeplatte(n) zurückgezogen werden; Mittel (74, 72) zum Absenken der Hilfsplatte(n), damit die Palette auf den Trägern eines Regals abgesetzt werden kann; und Mittel zum Zurückziehen der Hilfsplatte(n) aus den Gabeltaschen.

2. Palettenverlade-Tragplatteneinheit gemäß Anspruch 1, dadurch gekennzeichnet, daß als Mittel (74, 72) zum Anheben der Hilfsplatte(n) auf erste und zweite Niveaus ein hydraulischer Stoßheber (74) verwendet wird.

3. Palettenverlade-Tragplatteneinheit gemäß Anspruch 2, dadurch gekennzeichnet, daß der hydraulische Stoßheber (74) eine Hebel- oder Nockenanordnung (72) beaufschlagt, wodurch die erforderliche Vertikalbewegung (72) verursacht wird.

4. Palettenverlade-Tragplatteneinheit gemäß einem der vorhergehenden Ansprüche, dadurch gekennzeichnet, daß als Mittel für die Seitwärtsbewegung der Hilfsplatte(n) gegenüber der Einheit auf dem ersten erhöhten Niveau ein hydraulischer Stoßheber oder ein Hydro- oder Elektromotor verwendet wird.

5. Palettenverlade-Tragplatteneinheit gemäß Anspruch 4, dadurch gekennzeichnet, daß der hydraulische Stoßheber bzw. der Hydro- oder Elektromotor mit einem Seilzug- oder einem Kettenzugsystem verbunden ist, um die Stößel- oder Motorbewegung in eine gegenüber dieser schnellere Tragplattenbewegung zu übersetzen.

6. Palettenverlade-Tragplatteneinheit gemäß einem der vorhergehenden Ansprüche, dadurch gekennzeichnet, daß sowohl die Primärplatten als auch die Hilfsplatten beidseitig aus- bzw. eingefahren werden können.

## Revendications

1. Un ensemble à plateau manipulateur de palettes destiné à placer des palettes aux surfaces supérieures et inférieures planchéiées sur des baies et à les en sortir, comprenant un ou des plateaux primaires (5) s'engageant sous les planches inférieures d'une palette et déplaçant la palette latéralement par rapport à l'ensemble vers une position sur deux poutres d'une baie de stockage de l'entrepôt; CARACTERISE EN CE qu'il a au moins un plateau auxiliaire (30) normalement replié sous le niveau de la surface ou des surfaces porteuses du plateau ou des plateaux primaires; moyens (74, 72) d'élever le plateau ou les plateaux auxiliaires aux premier et second niveaux d'élévation par rapport au plateau ou aux plateaux primaires; moyens de déplacer le plateau ou les plateaux auxiliaires latéralement par rapport à l'ensemble à un tel premier niveau d'élévation et sans charge, pour l'insérer ou les insérer dans les entrées de fourche d'une palette sur le plateau ou les plateaux primaires latéralement avancés sous les planches supérieures de la palette; moyens (74, 72) de hausser le plateau ou les plateaux auxiliaires quand ils sont ainsi avancés au second niveau d'élévation pour prendre la charge de la palette du plateau ou des plateaux primaires; moyens de retirer le plateau ou les plateaux primaires quand la charge est prise par le plateau ou les plateaux auxiliaires; moyens (74, 72) d'abaisser le plateau ou les plateaux auxiliaires pour déposer la palette sur les poutres de la baie; et moyens de retirer le plateau ou les plateaux auxiliaires des entrées de fourche.

2. Un ensemble à plateau manipulateur de palettes selon la revendication 1, où les moyens (74, 72) d'élever le plateau ou les plateaux auxiliaires aux premier et second niveaux d'élévation comprend un piston hydraulique (74).

3. Un ensemble à plateau manipulateur de palettes selon la revendication 2, où le piston hydraulique (74) agit sur un dispositif à levier ou à came (72) pour fournir le mouvement vertical nécessaire.

4. Un ensemble à plateau manipulateur de palettes selon l'une quelconque des revendications précédentes, où les moyens de déplacer le plateau ou les plateaux auxiliaires latéralement par rapport à l'ensemble au premier niveau d'élévation comprend un piston hydraulique ou un moteur hydraulique ou électrique.

5. Un ensemble à plateau manipulateur de palettes selon la revendication 4, où le piston hydraulique ou le moteur hydraulique ou électrique est associé à un système de câble ou chaîne et poulie pour donner un mouvement du plateau au-delà du mouvement du piston ou du moteur.

6. Un ensemble à plateau manipulateur de palettes selon l'une quelconque des revendications précédentes, où les plateaux primaires et les plateaux auxiliaires sont des plateaux à double extension.
